# EUROPÄISCHE PATENTSCHRIFT

(11) **EP 1 334 874 B1**
(45) Veröffentlichungstag und Bekanntmachung des Hinweises auf die Patenterteilung: **29.03.2006**
(21) Anmeldenummer: 03001602.6
(22) Anmeldetag: 24.01.2003
(51) Int. Cl.: B60R 5/04, B60J 1/20

(54) **Anordnung einer Antriebseinheit zur Bewegung einer Abdeckung in einem Kraftfahrzeug**
Driving unit assembly for moving a covering in a motor vehicle
Ensemble d'entrainement pour le movement un recouvrement dans une véhicule à moteur

(30) Priorität: 31.01.2002 DE 10203743
(43) Veröffentlichungstag der Anmeldung: 13.08.2003
(73) Patentinhaber: Gross, Beatrix, 70469 Stuttgart (DE)
(72) Erfinder: Schmidt, Horst, 70469 Stuttgart (DE)
(74) Vertreter: Kohler Schmid Möbus

(56) Entgegenhaltungen:
- EP-A- 1 084 907
- US-A- 5 404 926
- US-A- 5 409 284
- US-A- 5 551 744
- US-A1- 2001 038 224
- US-B1- 6 318 789

## Beschreibung

Die vorliegende Erfindung betrifft eine Antriebseinheit zur Bewegung einer Abdeckung in einem Kraftfahrzeug. Die Abdeckung kann starr ausgebildet, zusammengefaltet oder bei einem Abdeckrollo aus- und einziehbar zusammengerollt sein.

Eine Abdeckung dient dazu, eine Einsehbarkeit des Kofferraums zu verhindern. Der Abdeckung kommt gleichzeitig auch eine Sicherheitsfunktion zu, weil die Abdeckung Gegenstände im Kofferraum bei einem Unfall zurückhalten kann.

Ein an sich bekanntes Abdeckrollo setzt sich im Wesentlichen aus einer Wickelwelle und einer Abdeckung zusammen, die auf der Wickelwelle mittels einer Federeinrichtung aufrollbar ist. Die Abdeckung kann aus- und eingezogen werden, um Teile eines Kofferraums, Laderaums oder sonstiger Bereiche eines Kraftfahrzeugs abzudecken.

Bei einem Kombi-Kraftfahrzeug ist keine permanente, ortsfest angeordnete starre Abdeckung oder Begrenzung des Kofferraums vorgesehen, damit der Kofferraum variabel gestaltet werden kann und eine optimale Beladung des Kraftfahrzeugs möglich wird.

In ähnlicher Weise werden auch bei Coupé-Cabriolets mit zusammenklappbarem Metalldach Abdeckungen eingesetzt. Das bei diesen Kraftfahrzeugen aus mehreren Teilen bestehende Fahrzeugdach kann automatisch zusammengefaltet und im Kofferraum verstaut werden. Vor dem Öffnen des Fahrzeugdaches muss eine Abdeckung ausgezogen werden, die den Kofferraum unterteilt. Die ausgezogene Abdeckung markiert den zur Verfügung stehenden Nutzraum des Kofferraums, damit der Anwender kein Gepäck in dem Bereich des Kofferraums platziert, den später das zusammengefaltete Fahrzeugdach benötigt. Es soll vermieden werden, dass das Fahrzeugdach beim Einfahren in den Kofferraum das Gepäck zerdrückt oder die Mechanik zur Bewegung des Fahrzeugdaches Schaden nimmt. Der ausgezogene Zustand der Abdeckung kann mit einem elektrischen Kontakt oder einem Sensor überwacht werden, um die motorgetriebene Dachöffnung erst bei ausgezogener Abdeckung einzuleiten.

Abdeckungen werden auch als Sonnenschutz an den Fenstern des Kraftfahrzeugs verwendet. Auch dort muss eine Abdeckung ein- und ausgezogen werden.

Die Erfindung ist daher im Kraftfahrzeug überall dort einsetzbar, .wo eine Abdeckung definiert bewegt werden muss.

Manuell bedienbare Abdeckrollos sind aus praktischer Anschauung bei Kombi-Fahrzeugen bekannt. Motorgetriebenes Abdeckrollos sind beispielsweise durch die DE 195 39 848 A1 US 5 551 744 A und EP 1 084 907 A2 bekannt geworden.

Allgemein ergeben sich bei der Realisierung von elektromotorischen Antrieben von Abdeckungen in einem Kraftfahrzeug die folgenden technischen Probleme: Der zum Einbau benötigte Bauraum soll möglichst klein gehalten werden. Der Antrieb muss so ausgestaltet sein, dass die Abdeckung gleichmäßig bewegt bzw. ein- oder ausgezogen wird. Die Montage soll schnell und einfach durchgeführt werden können.

Diese Probleme werden durch eine Anordnung einer Antriebseinheit gemäß Patentanspruch 1 gelöst. Die Anordnung des Motors oder der Antriebseinheit im Bereich des Fahrzeugdachs oder am Fahrzeugdach bzw. Fahrzeughimmel und die Anordnung des mindestens einen Antriebselements zur Auslenkung der Abdeckung vereinfacht die Montage und trägt zum reproduzierbaren Antrieb bei.

Die Auslenkung der Abdeckung kann durch zwei einfache unterschiedliche Antriebseinheiten realisiert sein. Zum einen kann eine Antriebseinheit einen Motor zum Antrieb einer flexiblen Welle und ein Getriebe zur Umwandlung der Rotation der Welle in eine Translation eines mit einem Mitnehmer verbundenen Antriebselements aufweisen, wobei der Mitnehmer zur Auslenkung der Abdeckung vorgesehen ist. Zum anderen kann eine Antriebseinheit auch einen Motor und mindestens ein Schneckengetriebe zur translatorischen Bewegung des mindestens einen Antriebselements aufweisen.

In bevorzugter Realisierung des Getriebes der ersten Antriebseinheit umfasst das Getriebe ein Abtriebsrad zum Eingriff in eine Außenprofilierung der Welle.

Die Ausgestaltung von Antriebselementen zur Bewegung des Mitnehmers kann unterschiedlich durchgeführt werden. Zum einen können die Antriebselemente zur Hin- und Herbewegung des Mitnehmers durch einen flexiblen Schaft ausgebildet sein, dessen Oberfläche eine Profilierung aufweist, mit der das Abtriebsrad durch eine Verzahnung in Eingriff kommt. Zum anderen können die Antriebselemente zur Auslenkung des Mitnehmers durch einen umgelenkten Zahnriemen ausgebildet sein, der über das Abtriebsrad antreibbar ist. Weiterhin ist es auch denkbar, dass das Antriebselement zur Hin- und Herbewegung des Mitnehmers durch einen Seilzug ausgebildet ist, welcher durch das Abtriebsrad aufwickelbar und über den Mitnehmer mit der Abdeckung verbunden ist.

Es kann auch eine Rückholfeder vorgesehen sein, deren Federkraft dem Aufwickelvorgang des Seilzuges entgegenwirkt. Die Abdeckung wird bei nachlassendem Seilzug wieder automatisch in seine Ausgangstellung zurückgezogen. Die Rückholfeder kann je nach Anordnung des Seilzuges als Zug- oder Druckfeder ausgebildet sein.

Der Mitnehmer ist erfindungsgemäß stets so mit dem Antriebselement verbunden, dass aus der Betätigung des Antriebselements eine Verschiebung des Mitnehmers resultiert. Der Mitnehmer kann unterschiedlich ausgestaltet sein, nämlich als Absatz, als Haken, als Schieber, Anschlag usw.

Die Erfindung wird anhand schematischer Darstellungen zu zwei Ausführungsbeispielen in der nachfolgenden Beschreibung näher erläutert. Es zeigt:
- **Fig. 1**: eine perspektivische Ansicht wesentlicher Teile einer ersten Antriebseinheit eines Abdeckrollos;
- **Fig. 2**: eine perspektivische Ansicht eines Getriebes der ersten Antriebseinheit;
- **Fig. 3**: eine perspektivische Ansicht des Getriebes nach Fig. 2 nach Abnahme des Gehäuses;
- **Fig. 4**: die Funktion der ersten Antriebseinheit nach Fig. 1;

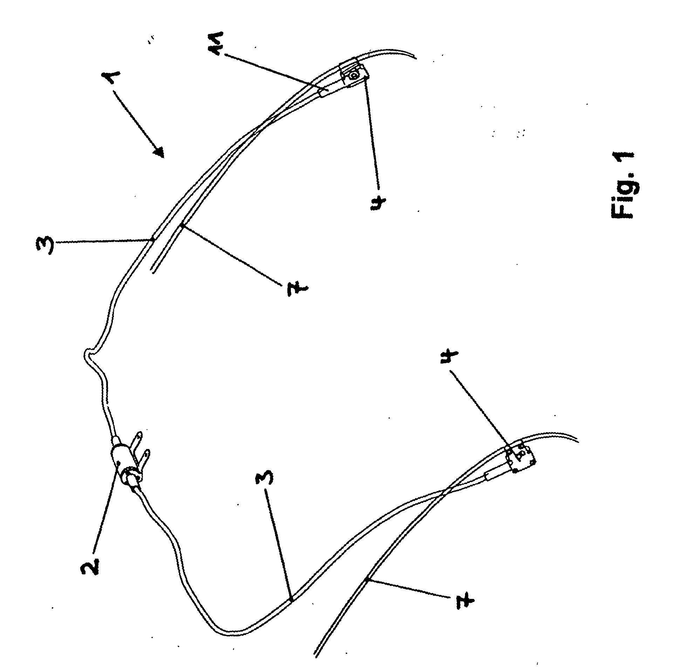

Aus der Fig. 1 ist ersichtlich, dass eine Antriebseinheit 1 zur Bewegung einer in der Fig. 1 nicht gezeigten Abdeckung eines Abdeckrollos einen Elektromotor 2, zwei flexible Wellen 3 (eine für die linke und eine rechte Seite der Abdeckung) und zwei jeweils einer Welle 3 zugeordnete Getriebe 4 umfasst.

Die Abdeckung ist auf einer Wickelwelle mittels einer Federeinrichtung aufrollbar und kann aus- und eingezogen werden. Die Federeinrichtung zieht die Abdeckung automatisch ein. Das Ausführungsbeispiel betrifft eine Antriebseinheit für eine Abdeckung eines Kofferraums eines Kombi-Kraftfahrzeugs.

Der Elektromotor 2 oder die Antriebseinheit 1 kann am Fahrzeugdach oder an anderen Karosseriebereichen, wie beispielsweise im Bereich der D-Säule des Kombi-Kraftfahrzeugs, mittels Befestigungselementen 5 angebracht werden. Der Elektromotor 2 treibt die flexiblen Wellen 3 an.

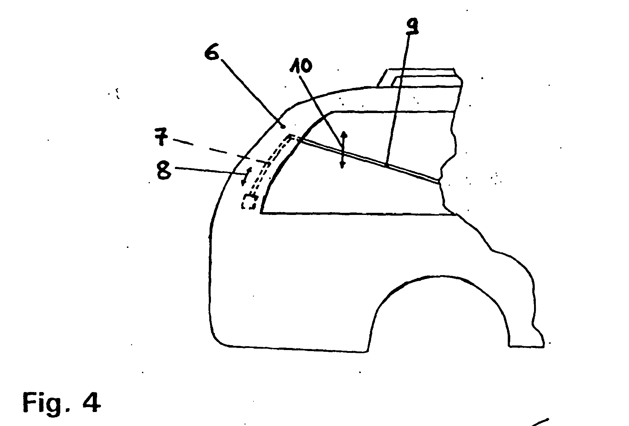

Die Funktion dieses Antriebs ist in der Fig. 4 veranschaulicht. Die flexiblen, in der Fig. 4 nicht dargestellten Wellen aus Kunststoff oder Metall werden beidseitig jeweils in einer Nut in einer linken und in einer rechten D-Säule 6 eines Kraftfahrzeugs untergebracht. Die Rotation der flexiblen Wellen wird durch die Getriebe 4 in eine translatorische Bewegung beidseitig angeordneter Antriebselemente (Schaft 7) umgesetzt, die ebenfalls in der D-Säule 6 in einer Führungsschiene beweglich angeordnet sind. Die Translation der Antriebselemente 7 verdeutlicht der Doppelpfeil 8. Jede Bewegung eines Antriebselements 7 führt zur Auslenkung eines Mitnehmers. Der Mitnehmer kann fest an einem dem Getriebe 4 abgewandten Ende des Antriebselements 7 angebracht oder beweglich positioniert sein. Der Mitnehmer wirkt mit dem vorzugsweise verstärkten Ende einer Abdeckung 9 zusammen. Daher kann eine Translation der Antriebselemente 7 und damit des Mitnehmers ein Anheben der Abdeckung 9 in vertikaler Richtung 10 zum Fahrzeugdach hin bewirken.

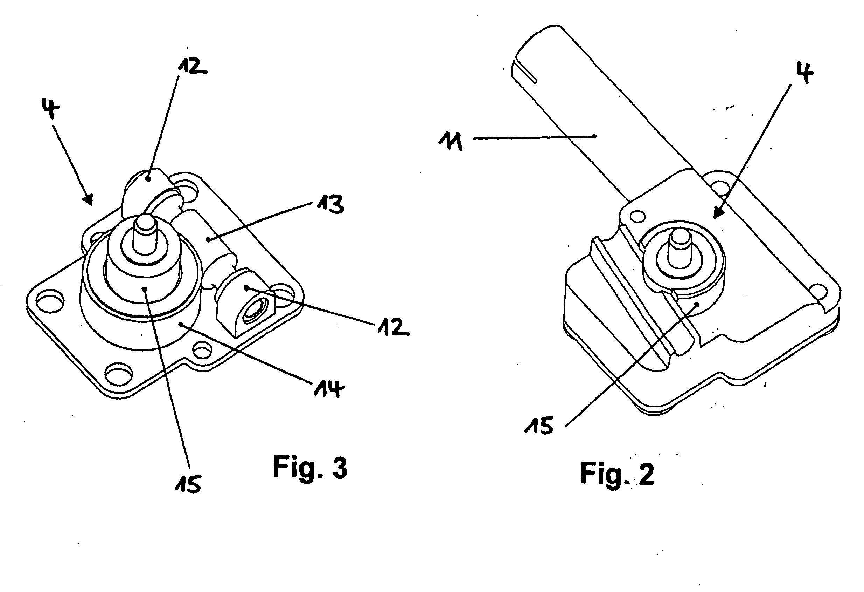

Die flexible Welle 3 ist einenends mit dem Elektromotor 2 und anderenends mit dem Getriebe 4 verbunden. Gemäß Fign. 2 und 3 treibt die in eine Kupplung 11 eingeführte flexible Welle 3 zunächst eine in Lagerschalen 12 fixierte Schnecke 13 an, deren Bewegung wiederum über ein Schneckenrad 14 auf ein Abtriebsrad 15 übertragen wird. Die Oberfläche der durch einen Schaft ausgebildeten Antriebselemente 7 ist so gestaltet (Verzahnung zwischen Rillen oder Profilen des Antriebselements 7 mit Zähnen des Abtriebsrads 15), dass eine Umsetzung der Rotation des Abtriebsrads 15 in eine Translation des Antriebselements 7 stattfindet.

Die in den Figuren gezeigten mechanischen Komponenten des Antriebs können mit elektrischen Kontakten oder Sensoren so kombiniert werden, dass eine Überwachung des Zustands der Abdeckung 9 und beispielsweise ein automatisches Anheben der Abdeckung beim Öffnen der Heckklappe erfolgt. Es ist auch ein Betätigungsschalter im Innenraum des Kraftfahrzeugs denkbar, um die Abdeckung anzuheben.

Obgleich vielfältige Kombinationen und Betätigungsmechanismen möglich sind, wird folgende Anwendung die Regel sein: Zunächst ist die Abdeckung bis zu einem Rastpunkt im Bereich der D-Säule ausgezogen und eingehängt (Schließstellung). Wird nun die Heckklappe geöffnet, läuft der Mitnehmer nach oben und lenkt die Abdeckung in Richtung Fahrzeugdach aus der ursprünglichen horizontalen Abdeckebene aus. Die Abdeckung erreicht eine Ladestellung zum Be- oder Entladen des Kofferraums. Wird die Heckklappe anschließend wieder geschlossen, fährt das Antriebselement zurück, nimmt die Abdeckung mit und schiebt die Abdeckung in die Schließstellung zurück. Eine Endabschaltung schaltet den Antrieb ab. Es findet ein automatisches Anheben und Absenken beim Betätigen der Heckklappe statt.

### BEZUGSZEICHENLISTE

- 1: Antriebseinheit
- 2: Elektromotor
- 3: Welle
- 4: Getriebe
- 5 .: Befestigungselement
- 6: D-Säule
- 7: Antriebselement
- 8: Doppelpfeil
- 9: Abdeckung
- 10: Bewegungsrichtung
- 11: Kupplung
- 12: Lagerschale
- 13: Schnecke
- 14: Schneckenrad
- 15: Abtriebsrad

## Patentansprüche

1. Anordnung bestehend aus einer Antriebseinheit (1) zur Bewegung einer Abdeckung (9) in einem Kraftfahrzeug, wobei die Antriebseinheit (1) einen Motor (2) zur Bewegung von mindestens einem mit der Abdeckung (9) verbundenen Antriebselement (7) aufweist, wobei die Antriebseinheit (1) oder zumindest Teile der Antriebseinheit (1) wie der Motor (2) im Bereich des Fahrzeugsdachs oder am Fahrzeugdach und das mindestens eine Antriebselement in oder an der D-Säule oder einem anderen Karosseriebereich an- bzw. untergebracht ist oder sind, **dadurch gekennzeichnet, dass** die Antriebseinheit (1) den Motor (2) zum Antrieb einer flexiblen Welle (3) und ein Getriebe (4) zur Umwandlung der Rotation der Welle (3) in eine Translation des mit einem Mitnehmer verbundenen Antriebselements (7) aufweist, wobei der Mitnehmer zur Auslenkung der Abdeckung (9) vorgesehen ist, und das Getriebe (4) ein Abtriebsrad (15) zum Eingriff in eine Außenprofilierung der flexiblen Welle (3) umfasst.

2. Anordnung nach Anspruch 1, **dadurch gekennzeichnet, dass** das mindestens eine Antriebselement (7) durch einen flexiblen Schaft ausgebildet ist, dessen Oberfläche eine Profilierung aufweist.

3. Anordnung nach Anspruch 1, **dadurch gekennzeichnet, dass** das mindestens eine Antriebselement (7) durch ein Zugelement ausgebildet ist.

4. Anordnung nach Anspruch 3, **dadurch gekennzeichnet, dass** das Zugelement durch einen Zahnriemen ausgebildet ist.

5. Anordnung nach Anspruch 3, **dadurch gekennzeichnet, dass** das Zugelement durch einen Seilzug ausgebildet ist.

6. Anordnung nach Anspruch 5, **dadurch gekennzeichnet, dass** eine Rückholfeder vorgesehen ist, deren Federkraft dem Aufwickelvorgang des Seilzuges entgegenwirkt.

## Claims

1. Arrangement consisting of a drive mechanism unit (1) for moving a cover (9) in a motor vehicle, wherein the drive mechanism unit (1) comprises a motor (2) for moving at least one drive element (7) connected to the cover (9), wherein the drive mechanism unit (1) or at least parts of the drive mechanism unit (1), e.g. the motor (2), are mounted or accommodated in the region of the vehicle roof or inner roof and the at least one drive element is mounted or accommodated in or on the D-column or another body region, **characterized in that** the drive mechanism unit (1) comprises the motor (2) for driving a flexible shaft (3) and a gearing (4) for converting rotation of the shaft (3) into translation of the drive element (7) connected to a carrier, wherein the carrier is provided for deflecting the cover (9), and the gearing (4) comprises a driven gear wheel (15) for engagement in an outer profile of the flexible shaft (3).

2. Arrangement according to claim 1, **characterized in that** the at least one drive element (7) is formed by a flexible shaft whose surface is profiled.

3. Arrangement according to claim 1, **characterized in that** the at least one drive element (7) is formed by a tension element.

4. Arrangement according to claim 3, **characterized in that** the tension element is formed by a toothed belt.

5. Arrangement according to claim 3, **characterized in that** the tension element is formed by cable control.

6. Arrangement according to claim 5, **characterized in that** a return spring is provided whose spring force counteracts the winding process of the cable control.

## Revendications

1. Agencement composé d'une unité d'entraînement (1) pour déplacer un recouvrement (9) dans un véhicule automobile, l'unité d'entraînement (1) comportant un moteur (2) pour déplacer au moins un élément d'entraînement (7) relié au recouvrement (9), l'unité d'entraînement (1) ou au moins des parties de l'unité d'entraînement (1) comme le moteur (2) étant montée(s) ou logée(s) dans la zone du toit du véhicule ou sur le toit du véhicule et au moins l'élément d'entraînement étant monté ou logé dans le montant latéral arrière ou sur une autre zone de la carrosserie, **caractérisé en ce que** l'unité d'entraînement (1) comporte le moteur (2) pour l'entraînement d'un arbre flexible (3) et une transmission (4) pour transformer la rotation de l'arbre (3) en une translation de l'élément d'entraînement (7) relié à un entraîneur, l'entraîneur étant prévu pour dévier le recouvrement (9) et la transmission (4) comprenant une roue d'entraînement (15) destinée à s'engager dans le profilage extérieur de l'arbre flexible (3).

2. Agencement selon la revendication 1, **caractérisé en ce qu'**au moins l'élément d'entraînement (7) est formé par une tige flexible, dont la surface comporte un profilage.

3. Agencement selon la revendication 1, **caractérisé en ce qu'**au moins l'élément d'entraînement (7) est formé par un élément de traction.

4. Agencement selon la revendication 3, **caractérisé en ce que** l'élément de traction est formé par une courroie dentée.

5. Agencement selon la revendication 3, **caractérisé en ce que** l'élément de traction est formé par un câble tirant.

6. Agencement selon la revendication 5, **caractérisé en ce qu'**on a prévu un ressort de rappel, dont la tension s'oppose au processus d'enroulement du câble tirant.
